(19) Europäisches Patentamt
European Patent Office
Office européen des brevets

(11) **EP 3 037 793 A1**

(12) **EUROPEAN PATENT APPLICATION**

(43) Date of publication:
**29.06.2016 Bulletin 2016/26**

(51) Int Cl.:
***G01K 7/02*** *(2006.01)*

(21) Application number: **15159394.4**

(22) Date of filing: **17.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **23.12.2014 EP 14200078**

(71) Applicant: **ENDRESS + HAUSER WETZER GmbH + Co. KG**
**87484 Nesselwang (DE)**

(72) Inventor: **Lugli, Roberto**
**20090 Segrate (IT)**

(74) Representative: **Andres, Angelika Maria**
**Endress+Hauser (Deutschland) AG+Co. KG**
**PatServe**
**Colmarer Strasse 6**
**79576 Weil am Rhein (DE)**

(54) **A thermocouple system and a method for measuring process temperature**

(57)     A thermocouple system comprising: a first pair of thermo wires (W1, W2) being connected at a first measuring junction (J0) and being connected to a first pair of extension wires (E1, E2) at an intermediate junction (B1), and a temperature sensor (J1, RT) for measuring the temperature (T1) at said intermediate junction (B1).

Fig. 2

## Description

The present invention relates to a thermocouple system and a method for measuring process temperature.

Thermocouples are used in industrial applications especially when high-temperature needs to be measured. For these applications best available sensors are based on noble metals like Platinum or special alloys like "Pallaplath" thermocouples are employed. Some special thermocouples based on Tungsten and Tungsten-Rhenium alloy like C","D" or "G" type thermocouples are also used for some specific applications. However, all of these sensors are quite expensive. Therefore extension wires and compensation cables are widely used to limit the costs of a measuring point.

These compensation cables and extension wires (from now on generically called extension wires) are normally made of a different material or alloy compared to the more expensive thermocouple wires. These extension wires guarantee an acceptable compromise between costs and performance if their working temperature is kept within a certain value. Despite the fact that extension wires are available with special high temperature cladding to guarantee operation up to 500 degrees or even more, extension wires in general and also for thermocouples made out of noble metals can be used only up to 100 degrees if errors within few degrees are acceptable. The range of application can be extended up to 200 degrees but in this case several degrees of error must be accepted. In prior art, beyond these limits the extension cables are practically not usable because of the differences between their compensation effect (extension wire error) and the original wires thermo voltage (wanted measuring voltage). For some "exotic" thermocouples, like C, D or G type thermocouples, extension wires are often difficult to find and they are not recognized by the international standardization organizations.

Thus, it is an object of the present invention to propose an alternative thermocouple system, a terminal block and a measurement method that e.g. can be universally used independently of the thermocouple selected, that reduces costs in applications where thermocouple made out of noble metals are used and that offers superior performances compared to the standard extension cables.

The problem is solved by way of a thermocouple system, a terminal block and a method for measuring process temperature.

Regarding the thermocouple system the problem is solved by way of a thermocouple system comprising: a first pair of thermo wires being connected at a first measuring junction and being connected to a first pair of extension wires at an intermediate junction, and a temperature sensor for measuring the temperature at said intermediate junction.

This technique can be used at higher temperature than extension cable limited only by the availability of wires with material cladding able to withstand high temperature (i.e. fiberglass) keeping the total error limited to below 1.5 °C at working temperatures up to 350°C and even below 0.5°C in some special variants. The measurement method associated is based on the combination of two measurement inputs where one dedicated input is acquiring temperature measurement from a dedicated sensor, and e.g. uses this value to correct the thermocouple's voltage output measured on the other input, returning the process temperature without extension wire's intrinsic errors.

The first pair of thermo wires and the first pair of extension wires can be arranged in a tube, a sheath or the like to for a measuring insert. The extension wires and/or the thermo wires may additionally be embedded in a refractory material, e.g. a ceramic powder which may also be packed or compactified. Hence, only the loose ends of the extension wires may extend out of the elongated body of such a measuring insert. This insert may be inserted in a protective tube or may come in direct contact with a process medium whose temperature is to be measured. The extension wires may serve to electrically connect the thermo wires and to transmit an electrical signal, i.e. a measuring signal, to a transmitter. The transmitter may compris electric and/or electronic components for processing the measuring signal. The transmitter may be arranged in a housing or may comprise such a housing.

The intermediate junction may be at a certain height along the length of a measuring insert. Preferably the first and the second connection connecting the first thermo wire with the first extension wires and the second thermo wire with the second connection wire with the second extension wire are at (essentially) the same height.

In an embodiment of the thermocouple system said temperature sensor comprises a second pair of thermo wires forming a second measuring junction at said intermediate junction. The second pair of thermo wires may be made out of a different material or combination of materials as the first pair of thermo wires.

In another embodiment of the thermocouple system the second pair of thermo wires and the pair of extension wires extend along the same path essentially in parallel to each other. This may either be a free path, e.g. inside a hollow body or the path may be a path fixed by a filling material with which the hollow body is filled.

In another embodiment of the thermocouple system the intermediate junction comprises a first terminal block to which the first pair of thermo wires and the first pair of extension wires is connected. Preferably the thermo wires are connected to the block from one side, i.e. a first side and the extension wires are connected to an opposite side, i.e. a second side facing away from said first side, to the terminal block. Additionally means for connecting the thermo wires and/or the extension wires, respectively may be provided for. The wires may be attached to the block e.g. by soldering, welding or by crimping.

In another embodiment of the thermocouple system the second measuring junction is connected to said first terminal block. The second measuring junction thus serves to determine, e.g. by way of the thermoelectric effect the temperature at the intermediate junction at which the thermo wires are connected to the extension wires.

In another embodiment of the thermocouple system the intermediate junction and the second measuring junction are thermally coupled via said first terminal block. The terminal block may be designed especially to provide for a homogeneous temperature distribution and/or electric isolation at the intermediate junction.

In another embodiment of the thermocouple system the second pair of thermo wires is connected at its end opposite of the second measuring junction to a second terminal block

In another embodiment of the thermocouple system the pair of extension wires is connected at its end opposite of the intermediate junction to said second terminal block. Said second terminal block may be (essentially) identical to the first terminal block or may have a different design. E.g. a standard terminal block may be employed as second terminal block. Such a second block may comprise connection terminals only or a transmitter and transmitter electronics may be integrated in such a transmitter.

In another embodiment of the thermocouple system said first terminal block comprises a first pair of connection terminals for receiving said first pair of thermo wires.

In another embodiment of the thermocouple system said first terminal block comprises a second pair of connection terminals for receiving said first pair of extension wires.

In another embodiment of the thermocouple system said first terminal block comprises a third pair of connection terminals for receiving said second pair of thermo wires. However further additional terminals may be provided for.

In another embodiment of the thermocouple system said first pair of thermo wires extend along a first length along a rod like probe, wherein said second pair of thermo wires extend along a second length along said rod like probe, wherein said first length is smaller than said second length, preferably less than 0,75 of said second length.

In another embodiment of the thermocouple system said terminal block is made out of a ceramic material.

In another embodiment of the thermocouple system said second measuring junction severs for measuring the temperature of said first terminal block, more precisely the temperature at said intermediate junction.

In another embodiment of the thermocouple system said second terminal block comprises connection terminals for tapping a first voltage between the first pair of extension wires and a second voltage between the second pair of thermo wires.

In another embodiment of the thermocouple system said temperature sensor comprises a resistance temperature device (RTD).

In another embodiment of the thermocouple system said RTD is embedded in said first terminal block.

In another embodiment of the thermocouple system said first terminal block comprises connection terminals for connecting said pair of extension wires to said RTD.

In another embodiment of the thermocouple system at least one pair of connection wires is connected to the at least one RTD, e.g. via said connection terminals.

The problem is also solved by a terminal block with at least one connection terminal for connecting at least a first pair of thermo wires to the terminal block, e.g. to form an intermediate junction, and at least one sensor element for measuring the temperature of said intermediate junction. The sensor element may be part of the terminal block. Also, only part of the sensor may be part of the terminal block, e.g. a part for connecting two wires, e.g. thermo wires which themselves may be connected to the terminal block via a bushing or clamp.

In an embodiment of the terminal block said connection terminals for receiving said connection wires are connected to each other by a connecting path.

Regarding the method the problem is solved by a method for measuring a process temperature, comprising (the steps of): tapping a first measurement signal generated by a first pair of thermo wires and transmitted over a pair of extension wires, tapping a second measurement signal at an intermediate junction point at which said first pair of thermo wires is connected to said pair of extension wires.

In an embodiment the method comprises (the step of): determining a temperature present at a first measurement junction by using the first measurement signal and the second measurement signal, e.g. by compensating said first signal by a correction signal or correction term determined using said second measurement signal.

In an embodiment of the method said first signal is a voltage generated by a first pair of thermo wires and said second signal is a voltage generated by a second pair of thermo wires, which second pair of thermo wires form a second measurement junction at said reference junction.

The invention is described in more detail with regard to the following figures:

Fig. 1 shows a schematic representation of a pair of thermo wires that are connected to a pair of extension wires via a terminal block at an intermediate junction,

Fig. 2 shows another schematic representation of a pair of thermo wires that are connected to a pair of extension wires via a terminal block at an intermediate junction, and wherein additionally a temperature sensor is provided that measures the temperature at the intermediate junction,

Fig. 3 shows yet another schematic representation of a pair of thermo wires that are connected to a pair of extension wires via a terminal block at an intermediate junction, wherein additionally a temperature sensor is provided that measures the temperature at the intermediate junction, and wherein an thermal bridge is included into the terminal block,

Fig. 4 shows still another schematic representation of a pair of thermo wires that are connected to a pair of extension wires via a terminal block at an intermediate junction, wherein additionally a temperature sensor is provided that measures the temperature at the intermediate junction, and wherein a sensor element in the form of a resistance temperature device (RTD) is integrated in the terminal block,

Fig. 5a shows a front view of a cross section of a terminal block and Fig. 5b a side view of a cross section through a terminal block,

Fig. 6a shows a front view of a cross section through a terminal block having a thermal bridge and

Fig. 6b shows a front view of cross section through a terminal block having an integrated RTD,

Fig. 7a shows in the upper row a front view of a cross section through a terminal block having a thermal bridge and in the lower row a bottom view of a cross section through the terminal block

Fig. 7b shows in the upper row a front view of a cross section through a terminal block having an integrated RTD, and in the lower row a bottom view of a cross section through the terminal block, and

Fig. 8a shows in the upper row a front view of a cross section through a terminal block having a single terminal connection for a pair of reference wires and in the lower row a bottom view of a cross section through the terminal block, and

Fig. 8b shows a side view of cross section through a terminal block with thermo wires, extension wires and reference wires inserted in corresponding terminals of the terminal block.

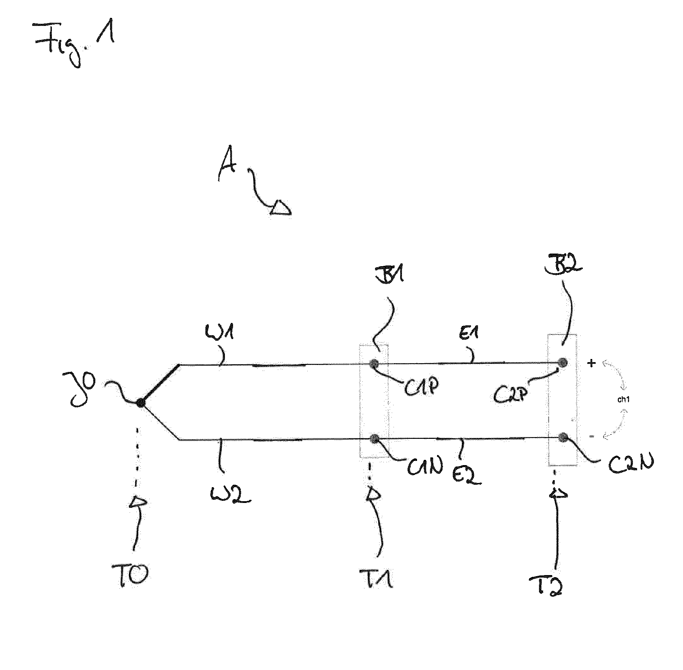

Figure 1 shows a pair of thermo wires W1, W2 which form a thermocouple. The thermo wires W1, W2 are connected to extension wires E1, E2 via a first terminal block B1. The extension wires E1, E2 are connected to a second terminal block B2, which may include a measurement electronics, a so called transmitter (not shown), for determining a measurement value from a measurement signal retrieved via the thermo wires W1, W2 and/or the extension wires E1, E2. The extension wires E1, E2 may alternatively be connected to a transmitter, which may be located at a remove position.

Extension wire E1 and extension wires E2 are connected to thermo wires W1 and W2. The thermocouple's positive wire W1 is connected to positive extension wire E1 and the thermocouple's negative wire W2 is connected to extension wire E2. The end of extension cable is normally directly connected to the measuring device terminals at T2. This can be a temperature transmitter, a recorder or in general the analog input of an acquisition system.

The thermo wires form a measurement junction J0, also called hot junction, at a measuring point, which may for example be a t the tip of a measuring insert.

According to standard thermocouple measurement principles once temperature T2 of terminal's connections C2P and C2N is kept equal and measured, process temperature T0 can be deducted from thermocouple terminal's voltage with a known method. Additionally to measure the temperature T2, also called cold junction, measurement systems use a standard temperature sensor that can be internal in the measurement device or placed externally close to the terminals C2P and C2N; in this case a dedicated channel ch1 of the measurement system is sometimes used to measure the cold junction temperature and compensate its effect to calculate the final temperature of the process. This technique offers good precision depending on the thermocouple intrinsic errors.

When extension wires E1, E2 are added to the system as shown in figure 1 the additional error, e.g. due to a temperature difference between connections C1 P and C2P at temperature T1 and C1 N and C2N at temperature T2, respectively, of the extension wires E1, E2 must be considered. Hence, special extension wires are used depending on the kind of thermocouple used for measurement as a balance between limiting the additional error versus keeping the cost of the measurement point at an affordable level. Noble metals thermocouples R and S are widely used in high temperature applications due to their high stability and their very limited errors at temperature around 1500 °C or above. These thermocouples types can use special, e.g. copper based, extension wires E1, E2, cf. patent applications US 3926681 A and US 4002500 A, that guarantee a limited error if the environment temperature at T1 is limited to 100 °C or up to 200 °C if additional extension wires errors around some degrees are acceptable. Terminal block B1 at temperature T1 may be made in a special design to guarantee homogeneity of temperature on the two wire's connection C1 P and C1 N. Additionally wire diameters and materials are also taken into account in order to minimize different conducted heat from thermocouple wires W1, W2 to extension wires E1, E2, avoiding thus additional errors due to the different temperature that can be established between C1 P and C1 N terminals, cf. US-patent US 8608377B2.

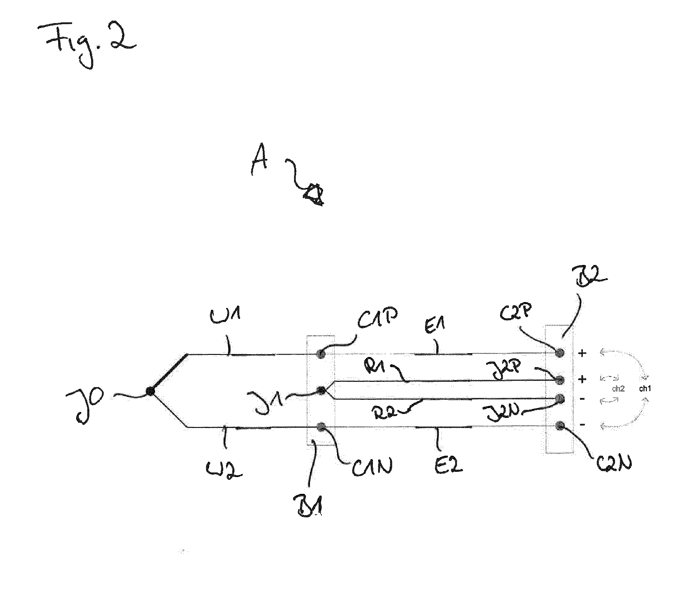

Figures 2, 3, 4 show different types of a terminal block B1 at temperature T1, equipped with extension cables E1, E2, to reduce extension cables E1, E2 intrinsic error. With this terminal block B1, the error contribute of the connection, between thermocouple terminals at temperature T1 and measurement terminals at temperature T2, is lower than what is claimed by prior art solutions. Moreover this new technique extends the temperature range where such a connection will be usable to over 350 °C, making it possible to reduce the length of the expensive noble-metal thermocouple W1, W2, by placing the connection between thermocouples wires W1, W2 and extension wires E1, E2 more close to the process despite of the higher environment temperature at T1.

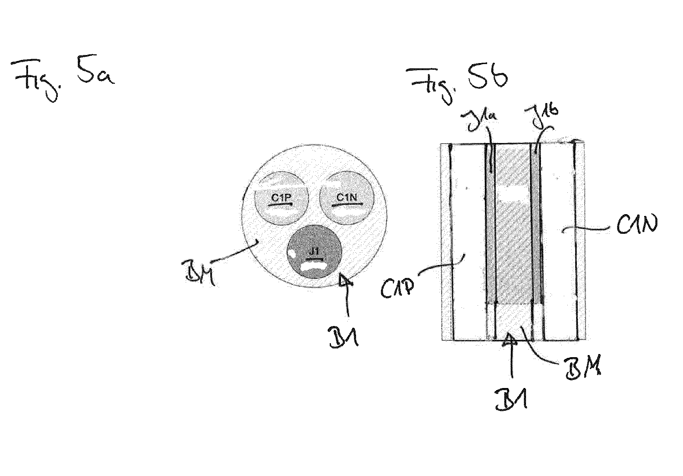

Terminal block B1 is made of the two usual connections C1 N, C1 P plus additionally one or two connections, as e.g. shown in figures 5a, 6a, 6b, 7a, 7b. These additionally conducting terminals J1P, J1N, J1a, J1b are fabricated, e.g. molded, into the terminal block B1 material to guarantee that all three or four connections C1p, C1N, J1P, J1N have the same temperature, i.e. temperature T1. The additional junction J1 can thus be used to measure temperature T1 of the terminal block B1.

The extension wires E1, E2 used may be two identical wires, for example two copper wires, and they will connect terminal block B1 at T1 with measurement terminal block B2 at T2. They will also connect the terminal C1 P at T1 with the terminal C2P at T2 and terminal the terminal C1 N at temperature T1 to the terminal C2N at temperature T2, respectively. On the market B type thermocouple extension wires E1, E2 are already available in a configuration suitable for high temperature applications. Any other isolated, e.g. made of copper, wire pair suitable to operate at high temperature can be used as extension wires E1, E2. Wires made of other material can be used but they must be identical. Moreover these copper wires are always the same kind of extension wires E1, E2 independently from the kind of thermocouple W1, W2 used, making this new extension wires terminal block B1 at temperature T1 universal solution for different applications with different thermocouples W1, W2.

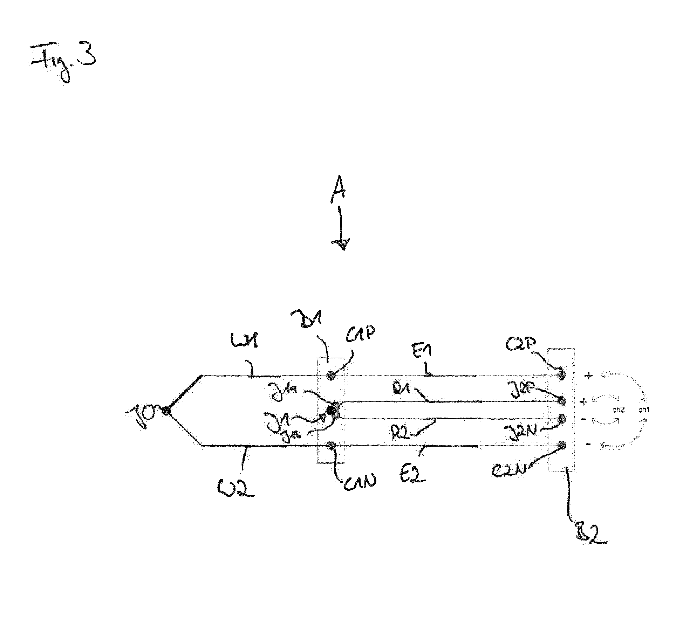

Wires R1 and R2 -from now on also called reference-wires- are used to measure with high precision the temperature T1 of the junction J1 embedded in the terminal block B1 at temperature T1. In case a single extra connection, as shown in figure 2, this connection will accommodate a couple of thermocouple wires R1, R2 joined together as reference-wires R1, R2. As an alternative, a double extra connection, which comprises a separate connection for each reference wire R1, R2, can be made available, as shown in figure 3. In this case each connection J1a, J1b will accommodate one thermocouple wire, used as reference-wire R1, R2. Hence, a T type thermocouple may be formed which is well known for its superior performances and stability at temperatures up to 350 °C. Alternatively a Copper-Costantan thermocouple can be formed by way of the reference wires R1, R2 which may achieve less than 1.5 °C of error at 350 °C. As another alternative a type E thermocouple may be formed which also offers similar performances up to 350 °C These thermocouples have an affordable price compared to noble metal thermocouples so they can be used to measure precisely the temperature of extension wires R1, R2 terminal block B1 at temperature T1. Other thermocouples can be used for reference wire R1 and reference wire R2 depending of the intrinsic characteristics of each alloy and the application's environment.

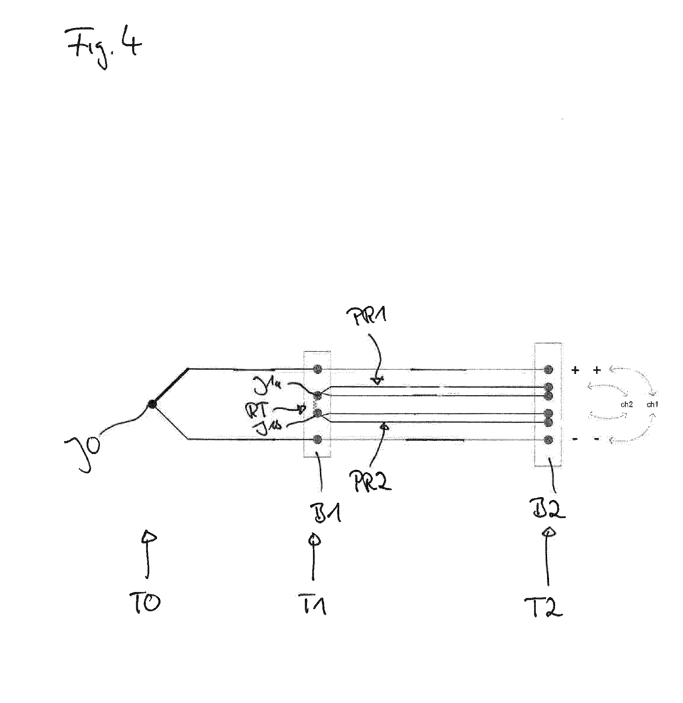

In figure 3 the two thermocouple wires R1, R2 are electrically isolated from each other but are jointed together at terminal and form an second measurement junction while according to figure 4 terminals J1 P and J1 N accommodate each a single isolated thermocouple wire R1, R2. The thermo voltage generated by reference wires R1, R2 is available at measurement terminals J2P, J2N at terminal block B2 as voltage difference between J2P and J2N. This thermo voltage can be used to measure with high accuracy the temperature T1 at junction J1. As shown in figure 4 where four reference wires, i.e. a first pair PR1 and a second pair PR2, are employed, each of these reference wires PR1, PR2 may be connected to a separate terminal

Other variants may be considered for the extension wires PR1, PR2 terminal block at T1 as shown in figure 4. For example, a resistive sensor RT, e.g. a PT100, or any other king of thermo-resistive sensor RT could be embedded in the extension wires terminal block B1. In this case the temperature T1 on the terminal block B1 can be measured with precision of 0.5 °C using the standard 4-wires technique or even 3-wires technique to reduce number of reference wires PR1, PR2. Other alternative to measure the temperature T1 of the terminal block can be considered. Assuming that the material BM of the terminal block B1 is optimized to achieve the best temperature uniformity a special coating treatment can offer stable and good optical emissive properties that can be used to measure the temperature of the terminal block B1 with optical sensing devices like e.g. a pyrometer. Such a solution can offer good precision in applications where process cannot be directly observed.

A copper's isolated wires pair can be used as reference-wires R1, R2, PR1, PR2, connected at each extra terminals J1a and J1b at T1. The four-wires terminals J2a,J2b and J2a, J2d at temperature T2 are available for measuring temperature at T1 using the known 4-wires technique.

In figure 5 an example of one possible realization of an terminal block B1 is shown which may be employed even if different materials and shapes can be made available as alternative solutions since for form and materials of terminal block B1 have to be select in order to optimize thermal characteristics and temperature working limits of the block B1. The terminal block B1 should guarantee an equal temperature on the terminal block's connections; good thermal conductivity helps to make the temperature at block's connections more uniform. Ceramic based materials BM are a good compromise between electrical isolation, thermal conductivity and high operating temperature ranges.

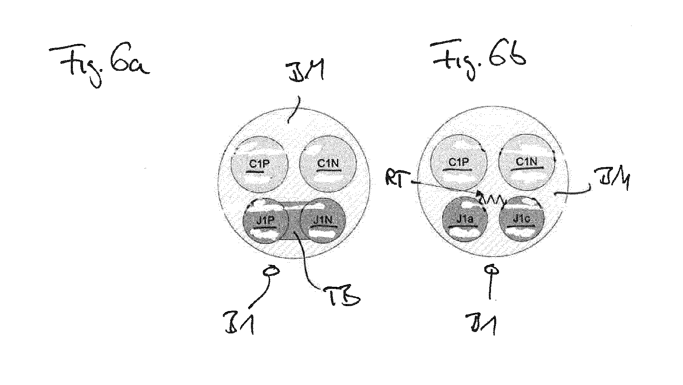

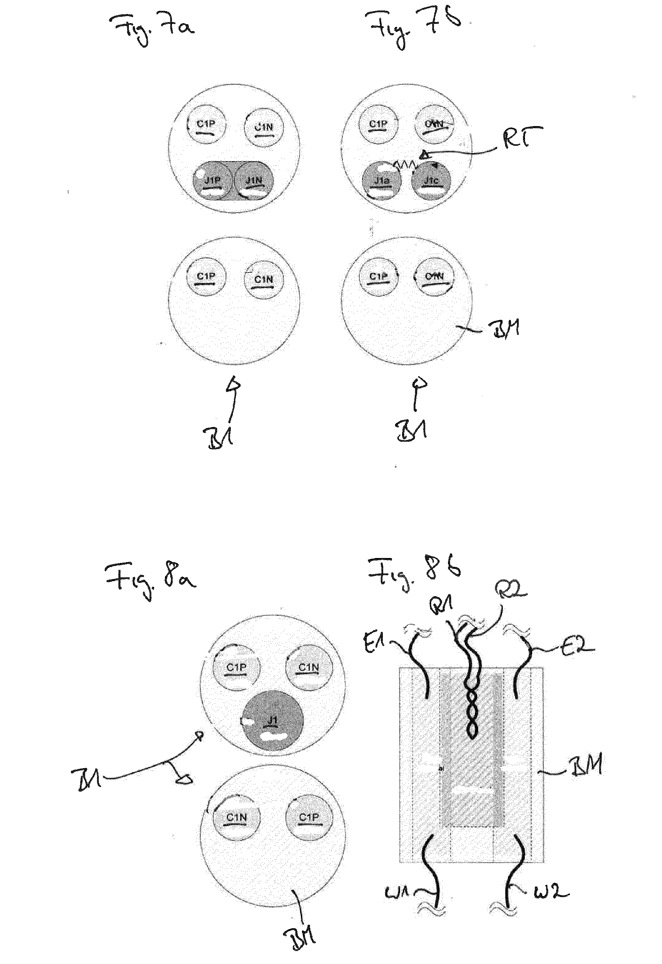

The reference wire terminal J1 in figure 5a is included in the terminal block B1 in the way that on one side is accessible to connect reference-wires R1, R2. This is the side where also extension wires E1, E2 are connectable to terminals C1 P and C1 N, respectively. On the other side only the thermocouple connection terminals, e.g. as shown the lower row of in figures 7a and 7b are accessible. All around a ceramic material BM is used as an embodiment that guarantees electrical isolation and/or thermal homogeneity. Figures 6a and 6b show two possible variants where two reference terminals J1P, J1N and J1a and J1c respectively, are accessible. In figures 6a and 7a a variant is depicted where thermocouple wires will be used as reference-wires R1, R2. In figure 6b and 7b a variant where a resistive platinum based PT100 sensor is embedded into the terminal block B1 between J1a and J1c reference-wires terminals. In figure 6a a thermal bridge TB is imbedded in the terminal block T1, which thermally and/or electrically connects terminals J1P, J1N.

The terminal block B1 is used to measure the process temperature T0 with improved precision reducing the error made by conventional extension wires E1, E2 in high temperature applications using noble metal based thermocouples. The approach combines the measurement on two measurement channels ch1, ch2 of one measurement instrument to provide the process temperature T0 with high accuracy. A first dedicated measurement channel ch2 is used to measure with high accuracy the temperature T1 on extension wires terminal block B1. This temperature T1 is then used to compensate the process thermocouple thermo voltage measured on the other channel ch1. In a first variant this method is applied to an extension wires terminal block as shown in figure 2 and figure 3. A second variant describes the new method applied to the extension wires terminal block represented in figure 4.

In the first variant, according to figure 2 and figure 3, temperature T1 of the extension wires terminal block B1, is measured from thermo voltage of the thermocouple made by the two reference wires R1, R2 jointed at junction J1. The thermo voltage is measured at terminals J2P and J2N. As in a normal thermocouple's arrangement the temperature T2 of the measuring terminal block B2 has to be known. This T2 temperature is normally acquired from a sensor internal in the measurement instrument, e.g. inside a housing of transmitter which contains an electronics for processing the measurement signal.

Temperature T1 can then be determined using the formula:

$$T1 = T_{TC\text{-}Ref\text{-}Wires}\left[V_{J2P\text{-}J2N} + V_{TC\text{-}Ref\text{-}Wires}(T2)\right]$$

wherein the brackets are used to identify the argument of the respective function, and wherein $T_{TC\text{-}Ref\text{-}Wires}$ and $V_{TC\text{-}Ref\text{-}Wires}$ are the direct and inverse thermocouple's tables values that associate thermo voltage to temperature and temperature to thermo voltage at 0 °C reference, defined by international standards, for the thermocouple made with reference wires.

When temperature is measured using a thermocouple the voltage, typically having the magnitude of millivolts, received from the thermocouple is a function of the difference between process temperature and the temperature at the terminals (cold junction). Normally the temperature on the terminals (cold junction temperature) is measured and then converted into a voltage that is then algebraically summed to the voltage transmitted from the thermocouple. The result of this sum is then inserted into a table (stored in the transmitter) from which the process temperature T0 can be determined.

For instance there is a table stored in the device for each type of thermocouple. This table is the standard mV-to-deg table and it is based on a 0 °C cold junction value. Hence, the cold junction temperature is measured and the compensation millivolt value calculated that transforms the present condition (i.e. cold junction not at 0°C) to the reference condition of the table (i.e. 0°C condition). Only after this compensation the process temperature T0 is determined by the table stored. The compensation may be carried out by using a second table called reverse table i.e. a deg-to-mV table of the selected thermocouple. This is the reason for the $V_{TC\text{-}Ref\text{-}Wires}$ (T2) argument in the function above. It is the value coming from the reverse table where the cold junction temperature is input and a mV value that we use to sum up with the measured value is received. The result is then entered as argument to the direct table $T_{TC\text{-}Ref\text{-}Wires}$ (mV). This direct table gets a voltage as input and gives back a temperature (in this case T1).

In the second variant described in figure 4 the temperature T1 can be calculated directly from the PT100 table or equation describing temperature as function of PT100 resistance available from international standards.

Once the temperature T1 has been measured it is used to provide a compensation of the process thermocouple's thermo voltage obtaining thus the process temperature T0 with high accuracy. Due to the equal extension wires, which are e.g. made of copper, these wires do not introduce any additional compensation and the process temperature T0 depends only from the type of process thermocouple used and from the temperature T1. Moreover these kind of extension wires can be used with every kind of process thermocouple. Thermo voltage from process thermocouple is made available through extension wires at measurement terminals C2P and C2N and measured on a dedicated channel ch1 of the measurement device. Using the temperature T1 deducted from the channel ch2 the process temperature T0 can be determined. This can be done using a dual channel measurement system where on channel ch1 the process thermocouple's thermo voltage is measured and on channel ch2 the thermocouple made of reference wires R1, R2 is measured. The reference wires are used to measure the temperature on extension wires terminal block at T1. The Temperature T1 can be measured with high precision independently of the kind of process thermocouple used removing thus most of the error normally introduced by the extension wires E1, E2.

When temperature T1 is known the process temperature T0 can be calculated. The Voltage measured by the process thermocouple W1, W2 is available through extension wires E1, E2 on channel ch1 at terminals C2P and C2N, i.e. thermo voltage $V_{ch1}$. Additionally the thermo voltage measured by the reference wires as thermo voltage difference between J2P and J2N, i.e. $V_{ch2}$, e.g. by way of the additional thermocouple. First the compensation thermo voltage $V_{TC-Comp}$ is calculated and process temperature T0 deducted:

$$T_0 = T_{TC\ Process}\ [V_{C2P-C2N} + V_{TC-Process}(T1)]$$

Wherein again brackets have been used to identify the argument of the respective functions and where $V_{C2P-C2N}$ is the process thermo voltage measured between C2P and C2N terminals, and $V_{TC-Process\ T1}$ is the equivalent thermo voltage of the process thermocouple measuring between T1 and 0 °C.

The terminal block B1 thus improves measurement accuracy removing errors normally made by extension wires like noble metal thermocouple extension wires. This new extension block also provides an extended working range compared with traditional extension wires terminal blocks. The same type of thermocouple extension wires and reference wires, which may both be e.g. made out of copper, may be employed to extend the measurement of each type of thermocouple. Thus, eliminate the need of using special extension wires matched for each type of thermocouple.

Further on, a transmitter may be provided which has a first and a second input channel which allow for tapping either the voltage of a first pair of thermo wires or the voltage of a temperature sensor, which may be a second pair of thermo wires or an RTD. The voltages tapped may be used for removing errors normally made when traditional extension wires are used and provide a more accurate measurement of the process temperature.

This offers several advantages compared to traditional extension wires terminal blocks and their related standard method to measure process temperature with thermocouples. These advantages are more evident in applications where noble metals thermocouple are used. When expensive thermocouples are used (typically in high temp applications), customers use extension wires to limit costs reducing the length of the expensive thermocouple. The use of these extension wires is prone to additional errors especially when the standard extension wires are used with environment temperatures above 100 °C making their use not practical above 200 deg. This is because extension wire materials are only similar to the original thermocouple materials in a limited working range. Therefore a solution is provided which allows a customer to minimize the length of an expensive thermocouple while keeping the measurement error limited.

Hence the terminal block proposed may possess an additional internal junction or even directly a sensor embedded which can be used to measure process temperature in an alternative way.

Figures 7a, 7b, 8a describes one possible embodiment of the intermediate terminal block B1. On the bottom side there are the terminals C1 P and C1 N for connecting the first pair of measuring wires, e.g. a pair of thermo wires. On the top side there are the terminals C1P and C1N for connecting a pair of extension wires E1, E2 and an additional terminal J1 to insert the second pair of measuring wires, e.g. reference wires R1, R2, which may for example be another pair of thermo elements, that makes possible to measure the temperature of the intermediate terminal block. However, not only one terminal block of the given kind may be employed but there may be a multitude of intermediate terminal blocks.

Terminals C1 N and C1 P are electrically connected on both sides (top and bottom) to guarantee connection between measuring wires and extension wires mentioned before. Connection of the wires to the terminals can be made via screws - not shown in the figures. Terminals are made of metal (preferably copper) and they are embedded in the terminal block made preferably of a ceramic material to uniform the temperature on the terminal block and ensure good thermal coupling between all terminal contacts.

The C1 P and C1 N terminals may be made of small tubes of metal and terminal contacts are available on both side (top and bottom) of the terminal block as shown in figure 8b. The terminal connection J1 is made available only on the top side of connection block but it may extend internally for most of the length of the terminal block according to figure 8b.

## Claims

1. A thermocouple system comprising:

    a first pair of thermo wires (W1, W2) being connected at a first measuring junction (J0) and being connected to a first pair of extension wires (E1, E2) at an intermediate junction (B1), and a temperature sensor (J1, RT) for measuring the temperature (T1) at said intermediate junction (B1).

2. A thermocouple system according to the preceding claim:

wherein said temperature sensor (J1) comprises a second pair of thermo wires (R1, R2) forming a second measuring junction (J1) at said intermediate junction (B1).

3. A thermocouple system according to the preceding claim:

wherein the second pair of thermo wires (R1, R2) and the pair of extension wires (E1, E2) extend along the same path essentially in parallel to each other.

4. A thermocouple system according to at least one of the preceding claims:

wherein the intermediate junction (B1) comprises a first terminal block (B1) to which the first pair of thermo wires (W1, W2) and the first pair of extension (E1, E2) wires is connected.

5. A thermocouple system according to at least one of the preceding claims:

wherein the second measuring junction (J1) is connected to said first terminal block (B1).

6. A thermocouple system according to at least one of the preceding claims:

wherein the intermediate junction (B1) and the second measuring junction (J1) are thermally coupled via said first terminal block (B1).

7. A thermocouple system according to at least one of the preceding claims:

wherein said first terminal block (B1) comprises a first pair of connection terminals (C1 P, C1N) for receiving said first pair of thermo wires (W1, W2), and/or wherein said first terminal block (B1) comprises a second pair of connection terminals (C1 P, C1 N) for receiving said first pair of extension wires (E1, E2), and/or wherein said first terminal block (B1) comprises a third pair of connection terminals (J1 P, J1 N) for receiving said second pair of thermo wires (R1, R2).

8. A thermocouple system according to at least one of the preceding claims:

wherein said first pair of thermo wires (W1, W2) extend along a first length along a rod like probe, wherein said second pair of thermo wires (R1, R2) extend along a second length along said rod like probe, wherein said first length is smaller than said second length, preferably less than 0,75 of said second length.

9. A thermocouple system according to at least one of the preceding claims:

wherein said second measuring junction (J1, RT) serves for measuring the temperature of said first terminal block (B1).

10. A thermocouple system according to at least one of the preceding claims:

wherein the second pair of thermo wires (R1, R2) is connected at its end opposite of the second measuring junction (J1) to a second terminal block (B2), and/or wherein the pair of extension wires (E1, E2) is connected at its end opposite of the intermediate junction (B1) to said second terminal block (B2), and wherein said second terminal block (B2) comprises connection terminals (C2P, C2N) for tapping a first voltage between the first pair of extension wires (E1, E2) and a second voltage between the second pair of thermo wires (R1, R2).

11. A thermocouple system according to at least one of the preceding claims:

wherein said first terminal block (B1) comprises connection terminals (C1 P, C1 N) for connecting said pair of extension wires (E1, E2) to said RTD.

12. A terminal block (B1) with at least one connection terminal (C1 P, C1 N) for connecting at least a first pair of thermo wires (W1, W2) to the terminal block (B1). e.g. to form an intermediate junction, and preferably at least one sensor element for measuring the temperature of said intermediate junction.

13. A method for measuring a process temperature (T0), comprising:

tapping a first measurement signal generated by a first pair of thermo wires (W1, W2) and transmitted over a pair of extension wires (E1, E2),

tapping a second measurement signal at an intermediate junction (B1) point at which said first pair of thermo wires (W1, W2) is connected to said pair of extension wires (E1, E2).

14. A method according to the preceding claim, comprising:

determining a temperature (T1) present at a first measurement junction (T0) by using the first measurement signal and the second measurement signal, e.g. by compensating said first signal by a correction signal or correction term determined using said second measurement signal.

15. A method according to the preceding claim, comprising:

wherein said first signal is a voltage generated by a first pair of thermo wires (W1, W2) and said second signal is a voltage generated by a second pair of thermo wires (R1, R2), which second pair of thermo wires (R1, R2) form a second measurement junction (J1) at said reference junction (B1).

Fig. 1

Fig. 2

Fig. 3

Fig. 4

Fig. 5a

Fig. 5b

Fig. 6a

Fig. 6b

Fig. 7a

Fig. 7b

C1P    C1N

J1P    J1N

C1P    C1N

C1P    C1N    RT

J1a    J1c

C1P    C1N

BM

BM                    BM

Fig. 8a

Fig. 8b

C1P    C1N

J1

C1N    C1P

BM

BM

R1    R2

E1              E2

BM

W1    W2

Europäisches
Patentamt

European
Patent Office

Office européen
des brevets

# EUROPEAN SEARCH REPORT

**Application Number**

EP 15 15 9394

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 428 780 A2 (GEN ELECTRIC [US]) 14 March 2012 (2012-03-14) | 1,3-8, 10-15 | INV. G01K7/02 |
| Y | * paragraphs [0001], [0004], [0005], [0007], [0008], [0009], [0013], [0018], [0037]; figures 5,6 * | 2,9 | |
| Y | US 2005/259719 A1 (PHILLIPS RICHARD W [US]) 24 November 2005 (2005-11-24) | 2,9 | |
| A | * paragraphs [0002] - [0004], [0009], [0023], [0025] - [0029] * | 3,5-8, 10,11,15 | |

**TECHNICAL FIELDS SEARCHED (IPC)**

G01K

The present search report has been drawn up for all claims

| Place of search | Date of completion of the search | Examiner |
|---|---|---|
| The Hague | 6 October 2015 | Phleps, Stefanie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 037 793 A1**

## ANNEX TO THE EUROPEAN SEARCH REPORT
## ON EUROPEAN PATENT APPLICATION NO.

EP 15 15 9394

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2015

| Patent document cited in search report | | Publication date | Patent family member(s) | | Publication date |
|---|---|---|---|---|---|
| EP 2428780 | A2 | 14-03-2012 | CN | 102435338 A | 02-05-2012 |
| | | | EP | 2428780 A2 | 14-03-2012 |
| | | | JP | 2012063355 A | 29-03-2012 |
| | | | US | 2012065923 A1 | 15-03-2012 |
| US 2005259719 | A1 | 24-11-2005 | DE | 102005023869 A1 | 22-12-2005 |
| | | | FR | 2870596 A1 | 25-11-2005 |
| | | | US | 2005259719 A1 | 24-11-2005 |
| | | | US | 2006227849 A1 | 12-10-2006 |

EPO FORM P0459

For more details about this annex : see Official Journal of the European Patent Office, No. 12/82

**REFERENCES CITED IN THE DESCRIPTION**

**Patent documents cited in the description**

- US 3926681 A
- US 4002500 A
- US 8608377 B2